# EUROPÄISCHE PATENTSCHRIFT

(11) **EP 1 691 116 B1**
(45) Veröffentlichungstag und Bekanntmachung des Hinweises auf die Patenterteilung: **13.06.2012**
(21) Anmeldenummer: 06002580.6
(22) Anmeldetag: 08.02.2006
(51) Int. Cl.: F16K 7/12

(54) **Membranventil**
Diaphragm valve
Vanne à membrane

(30) Priorität: 10.02.2005 DE 202005002152 U
(43) Veröffentlichungstag der Anmeldung: 16.08.2006
(73) Patentinhaber: GEMÜ Gebrüder Müller Apparatebau GmbH & Co. KG, 74653 Ingelfingen (DE)
(72) Erfinder: Müller, Fritz, 74665 Ingelfingen (DE)
(74) Vertreter: Dreiss

(56) Entgegenhaltungen:
- EP-A- 1 138 989
- DE-A1- 10 146 934
- DE-B3- 10 246 912
- GB-A- 657 324
- US-A- 2 054 340
- US-A- 2 186 833
- US-A- 3 011 758

## Beschreibung

Die Erfindung betrifft ein Membranventil, insbesondere für fluide (flüssige und/oder gasförmige) Medien, mit den Merkmalen des Oberbegriffs des Anspruchs 1.

Bei einem bekannten Membranventil dieser Art (DE-A-101 46 934) ist das Druckstück mit zwei Führungsstegen versehen, die über den ansonsten kreisförmigen Umfang des Druckstückes radial hinaus ragen, und in entsprechenden Nuten in der Wand des Zwischenstückes geführt sind. Dies bedingt, dass die Wand des Zwischenstückes am Ort dieser Nuten radial nach außen verstärkt bzw. versetzt ist, so dass am ansonsten zylindrischen Außenumfang des Zwischenstückes zwei Wulste oder Rippen entstehen, die eine Reinigung des Zwischenstückes, die zum Beispiel bei Sterilventilen äußerst wichtig ist, erschweren.

Auch konnte bei der bekannten Ausführungsform im Bereich der Nuten im Zwischenstück, in denen das Druckstück geführt wurde, kein Druck auf die Dichtmembrane und den Ventilkörper ausgeübt werden. Wegen der durch die Nuten bedingten Unterbrechung des Anpressdruckes war die Dichtheit des bekannten Ventils in diesem Bereich nicht sicher gewährleistet.

Aus der US-A-657,324 ist ein Membranventil bekannt, bei dem das Druckstück im wesentlichen kegelstumpfförmig ausgebildet ist und der Rand des Druckstücks Nuten aufweist, in welche von der Ventilhaube radial nach innen abragende Leisten eingreifen. Zwar verdreht sich das Druckstück nicht innerhalb der Haube, das Druckstück presst jedoch mit seiner gesamten Kegelfläche auf die Membran. Eine hohe Sicherheit für ein dichtes Schließen bietet dieses Ventil nicht.

Die US-A-3,011,758 offenbart ein im wesentlichen scheibenförmiges Druckstück, welches am Rand Nuten aufweist, in welche axial verlaufende Stege der Ventilhaube eingreifen. Zum sicheren Abschluss ist die Membran mit einem Dichtwulst versehen, der an einen am Ventilkörper vorgesehenen Dichtsteg angepresst wird. Im Übrigen ist die Membran mit dem Druckstück verschraubt.

Die den nächstkommenden Stand der Technik bildende EP 1 138 989 A2 zeigt ein Membranventil mit einem gegen Verdrehung gesicherten Druckstück. Eine optimale Abdichtung mit hohen Dichtkräften ist aber nicht möglich. Außerdem muss die Membran gegenüber dem Druckstück verdrehgesichert werden, da ansonsten der Drucksteg der Membran nicht mehr auf dem Drucksteg des Ventilkörpers zu liegen kommt.

GB 657 324 offenbart ein Membranventil gemäß dem Oberbegriff des Anspruchs 1.

Der Erfindung liegt die Aufgabe zugrunde, ein Membranventil bereit zu stellen, bei dem das Druckstück sicher geführt ist und welches mit Sicherheit dich verschließt. Außerdem soll die Möglichkeit bestehen, einfach Sensorelemente anzubauen.

Erfindungsgemäß wird dies mit einem Membranventil erreicht, das die Merkmale des Anspruchs 1 aufweist. Das Druckstück ist mit zwei Nuten und das Zwischenstück mit zwei Führungsnasen versehen, die sich jeweils diametral gegenüber liegen.

Die Nuten und die Führungsnasen sind gegen Dichtstege des Ventilkörpers und des Druckstückes versetzt angeordnet. Durch die Versetzung der Nuten und der Führungsnasen um 45° relativ zu den Dichtstegen können an der Außenwand des Zwischenstücks Sensoren, zum Beispiel elektrische Stellungsanzeigen oder Näherungsinitiatoren insbesondere in Richtung der Dichtstege und quer dazu angebracht werden.

Das Zwischenstück kann zweckmäßigerweise mit Gewindebohrungen versehen werden, beispielsweise zur Anbringung von Sensoren, beispielsweise Näherungsinitiatoren. Infolge der erfindungsgemäßen Ausbildung der Nuten im Druckstück und der Führungsnasen an der Innenwand des Zwischenstück erhält das Letztere eine glatte, zylindrische äußere Mantelfläche, die leicht zu reinigen ist. Ferner wird durch das erfindungsgemäße Druckstück der Anpressdruck beim Schließen des Ventils gleichmäßig über den gesamten Umfang verteilt, wodurch die Dichtheit wesentlich besser ist als bei der bekannten Ausführungsform, bei welcher insbesondere bei großen Weiten die Gefahr bestand, dass durch die radial nach außen ragenden Stege am Druckstück die Membrane beschädigt werden konnte.

Eine beispielsweise Ausführungsform der Erfindung wird nachfolgend an Hand der Zeichnungen erläutert. In der Zeichnung zeigen:
- Fig. 1: im Schnitt ein erfindungsgemäßes Ventil (ohne Darstellung der Ventilspindel);
- Fig. 2:: eine Draufsicht auf das Ventil nach Figur 1;
- Fig. 3: das Ventil nach Figur 1 in auseinander gezogener Darstellung;
- Fig. 4: einen Schnitt durch das Zwischenstück des Ventils nach Figur 1 zeigt;
- Fig. 5: einen Schnitt längs der Linie A-B von Figur 4 zeigt.

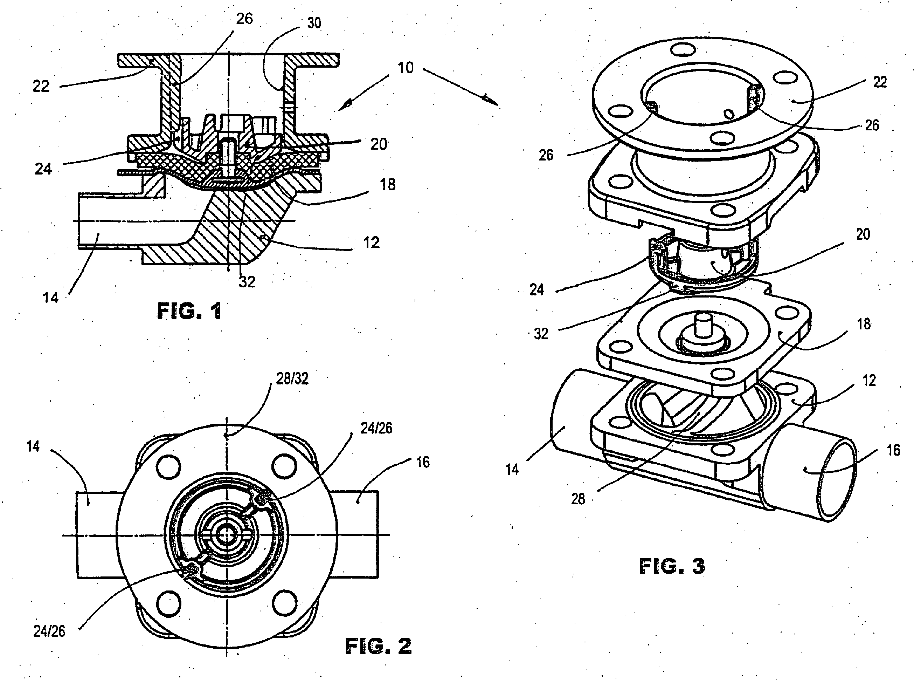

Figur 1 zeigt im Schnitt ein allgemein mit 10 bezeichnetes Membranventil, wobei der Antrieb und die Ventilspindel jedoch nicht dargestellt sind. Das Membranventil 10 umfaßt einen Ventilkörper 12 mit rohrstutzenförmigen Anschlüssen 14 und 16. Zwischen dem Ventilkörper 12 und einem Zwischenstück 22 ist eine Membrane 18 angeordnet, wobei das Zwischenstück 22 und der Ventilkörper 12 durch nicht dargestellte Schrauben fest miteinander verbunden sind.

Im Innern des im wesentlichen hohlzylindrischen Zwischenstückes 22 ist ein Druckstück 20 angeordnet, das durch die nicht dargestellte Ventilspindel, mit der das Druckstück geeignet verbunden ist, betätigbar ist.

Das Druckstück 20 ist an seinem Außenumfang mit zwei sich diametral gegenüber liegenden axial verlaufenden Nuten 24 versehen, und das Zwischenstück 22 hat an seiner Innenwand 30 zwei sich diametral gegenüber liegende, axial verlaufende Führungsnasen 26, die in die Nuten 24 des Druckstückes 20 eingreifen.

Das Druckstück 20 ist somit durch den Eingriff der Führungsnasen 26 in die Nuten 24 im Zwischenstück 22 in axialer Richtung geführt und gegen Verdrehen gesichert.

Wie Figur 2 zeigt, sind die Nuten 24 und die Führungsnasen 26 relativ zu dem Dichtsteg 28 des Ventilkörpers 12 und dem Dichtsteg 32 des Druckstückes 20 um 45° versetzt angeordnet.

Hierdurch wird erreicht, daß an der Außenwand des Zwischenstückes 22 insbesondere in Richtung der Dichtstege 28, 32 und quer zu diesen Sensoren, zum Beispiel elektrische Stellungsanzeigen oder Näherungsinitiatoren, angebracht werden können. Praktisch können solche Sensoren in beliebiger Lage an der Außenwand des Zwischenstückes 22 angebracht werden, ausgenommen in dem Bereich, in welchem die Führungsnasen 26 liegen.

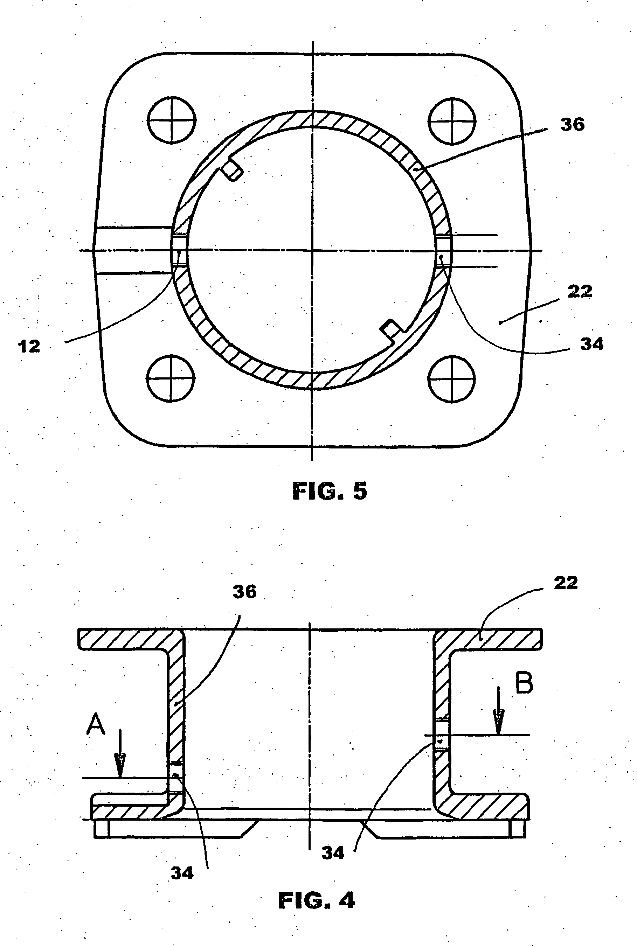

Wie die Figuren 4 und 5 zeigen, können zu diesem Zweck in der zylindrischen Wand 36 des Zwischenstückes 22 entsprechende Gewindebohrungen 34 ausgebildet, in die gewünschte Sensoren eingeschraubt werden können.

Durch die erfindungsgemäße Ausbildung des Zwischenstückes 22 und des Druckstückes 20 wird erreicht, daß das Zwischenstück 22 eine gleichmäßige, nicht unterbrochene zylindrische Außenfläche hat, an der in im wesentlichen beliebiger Lage Sensoren angebracht werden können. Durch das neuartige, kreisförmige Druckstück ergibt sich eine kreisrunde Auflage der Membrane am Zwischenstück und der Anpreßdruck auf die Membrane wird gleichmäßig über den gesamten Umfang verteilt. Schließlich wird durch den Dichtsteg am Druckstück die spezifische Anpreßkraft erhöht.

## Patentansprüche

1. Membranventil, insbesondere für fluide Medien, mit einem Ventilkörper, einem durch eine Ventilspindel betätigbaren Druckstück zur Beaufschlagung der Dichtmembrane sowie einem Zwischenstück, in welchem das Druckstück axial geführt und gegen Verdrehung gesichert ist, wobei das Druckstück (20) an seinem Außenumfang wenigstens eine axiale Nut (24), und das Zwischenstück (22) an seiner Innenwand (30) wenigstens eine axiale Führungsnase (26) aufweist, die in die Nut (24) eingreift, wobei
das Druckstück (20) zwei Nuten (24) und das Zwischenstück (22) zwei Führungsnasen (26) aufweist, die sich jeweils diametral gegenüber liegen.
**dadurch gekennzeichnet, daß** die Nuten (24) und die Führungsnasen (26) gegen Dichtstege (28, 32) des Ventilkörpers (12) und des Druckstückes (20) um 45° versetzt angeordnet sind.

2. Membranventil nach Anspruch 1, **dadurch gekennzeichnet, daß** das Zwischenstück (22) mit Gewindebohrungen (34) versehen ist zur Anbringung von Sensoren.

## Claims

1. A diaphragm valve, in particular for fluid media, comprising a valve body, a compressor actuatable by a valve stem for operating a diaphragm, as well as n intermediate piece, in which the said compressor is guided in axial direction and restrained against rotation, wherein said compressor (20) having at least one axial groove (24) at its outer circumference , and said intermediate piece (22) having at least one axial guide nose (26) at its inside wall (30) for engagement in the groove (24), wherein said compressor (20) has two grooves (24), and the intermediate piece (22) has two guide noses (26), disposed diametrically opposite to each other, **characterized in that** said grooves (24) and said guide noses (26) are disposed at 45° offset in relation to sealing lands (28, 32) of the valve body (12) and the compressor (20).

2. The diaphragm valve of claim 1, **characterized in that** the intermediate piece (22) has threaded bores (34) for attachment of sensors.

## Revendications

1. Vanne à membrane, en particulier pour des milieux fluides, avec un corps de vanne, une pièce de pression pouvant être actionnée par une tige de vanne pour la mise sous pression de la membrane d'étanchéité, ainsi qu'une pièce intermédiaire, dans laquelle la pièce de pression est guidée axialement et protégée contre la rotation, la pièce de pression (20) présentant sur sa circonférence extérieure au moins une rainure axiale (24) et la pièce intermédiaire (22) présentant sur sa paroi interne (30) au moins un nez de guidage axial (26) qui prend dans la rainure (24), la pièce de pression (20) présentant deux rainures (24) et la pièce intermédiaire (22) deux nez de guidage (26) qui sont respectivement diamétralement opposés les uns aux autres, **caractérisé en ce que** les rainures (24) et les nez de guidage (26) sont disposés décalés de 45° par rapport à des ponts d'étanchéité (28, 32) du corps de robinet (12) et de la pièce de pression.

2. Vanne à membrane suivant la revendication 1, **caractérisé en ce que** la pièce intermédiaire (22) est pourvue de trous taraudés (34) pour la fixation de capteurs.
